# EUROPEAN PATENT SPECIFICATION

(11) **EP 2 554 632 B1**
(45) Date of publication and mention of the grant of the patent: **10.10.2018**
(21) Application number: 11762759.6
(22) Date of filing: 28.03.2011
(51) Int. Cl.: C10B 49/04, C10B 57/06, C10B 53/08, F27B 1/16

(54) **FERRO-COKE PRODUCTION FACILITY COMPRISING A VERTICAL SHAFT FURNACE AND METHOD FOR PRODUCING FERRO-COKE**
EISENKOKS-HERSTELLUNGSANLAGE ENTHALTEND EINEN VERTIKALEN OFEN UND VERFAHREN ZUR EISENKOKSHERSTELLUNG
STRUCTURE DE PRODUCTION DU FERROCOKE COMPRENANT UN FOUR VERTICAL ET PROCÉDÉ DE PRODUCTION DU FERROCOKE

(30) Priority: 29.03.2010 JP 2010074481
(43) Date of publication of application: 06.02.2013
(73) Proprietor: JFE Steel Corporation, Tokyo 100-0011 (JP); JP Steel Plantech Co., Yokohama Kanagawa 222-0033 (JP)
(72) Inventor: ANYASHIKI, Takashi, Tokyo 100-0011 (JP); SATO, Takeshi, Tokyo 100-0011 (JP); FUJIMOTO, Hidekazu, Tokyo 100-0011 (JP); SUMI, Hiroyuki, Tokyo 100-0011 (JP); SATO, Hideaki, Tokyo 100-0011 (JP); SEKIGUCHI, Takeshi, Yokohama-shi Kanagawa 221-0056 (JP)
(74) Representative: Grünecker Patent- und Rechtsanwälte PartG mbB
(86) International application number: PCT/JP2011/057559
(87) International publication number: WO 2011/122535

(56) References cited:
- WO-A1-2011/018964
- JP-A- 7 097 577
- JP-A- H0 812 975
- JP-A- H07 126 648
- JP-A- S54 143 402
- JP-A- 2011 046 927
- Takashi Anyashiki ET AL: "Development of Carbon Iron Composite Process", JFE TECHNICAL REPORT, 1 May 2009 (2009-05-01), pages 1-6, XP055027660, Retrieved from the Internet: URL:http://www.jfe-steel.co.jp/en/research /report/013/pdf/013-02.pdf [retrieved on 2012-05-21]

## Description

### Field

The present invention relates to a ferrocoke production facility comprising a vertical shaft furnace that subjects a burden material fed from a furnace top to combustion, gasification, carbonization, or reduction to continuously produce ferrocoke, and a ferrocoke production method using the facility.

### Background

Generally used in operation of a blast furnace is metallurgical coke produced by carbonization of coal in a coke furnace. The metallurgical coke plays the roles of a spacer for providing adequate gas permeability in the blast furnace, a reducing agent, a heat source, and the like.

In recent years, there has been known a technique for obtaining metallurgical ferrocoke by mixing iron ore with coal, from the viewpoint of improvement in reactivity of coke. To produce ferrocoke by carbonizing an iron source material such as coal and iron ore in a general chamber-type coke furnace, the following techniques have been examined: 1) feeding a mixture of coal and fine iron ore into a chamber-type coke furnace; 2) briquetting coal and iron ore in a cold environment, that is, at room temperature, and feeding the briquetted material into a chamber-type coke furnace (see Non Patent Literature 1).

Meanwhile, as a coke production method in relation to a chamber furnace coke production method, there has been developed a continuous formed coke production method. In the continuous formed coke production method, a vertical shaft furnace made of chamotte bricks, not silica bricks, is used as a carbonization furnace, and coal is briquetted with a predetermined size by cold forming, and the briquetted coal is fed into the vertical shaft furnace to carbonize the briquetted coal by heating with a circulating heat carrier gas, thereby producing formed coke. The vertical shaft furnace has proven to be capable of producing coke with a strength equivalent to that of coke from a general chamber-type coke furnace, even if a large amount of non- or slightly-caking coal is used, which is abundant in resource reserve and less expensive. However, if the coal used is high in caking property, the formed coal is softened and fused in the shaft furnace, which makes the shaft furnace difficult to operate and results in deteriorated quality of coke products with deformation, breakage, and the like.

As an example of a continuous formed coke production method, there is a known method disclosed in Patent Literature 1. In this method, a cooling chamber is provided so as to be directly connected to a carbonization chamber in a carbonization furnace, a top gas in a carbonization furnace is introduced as a cooling gas to the lower part of the cooling chamber, most part of the gas having passed through the cooling chamber is discharged from the upper part of the cooling chamber, and the discharged gas is supplied as a heating medium gas to an inlet at the intermediate part of the carbonization furnace.

In the method disclosed in Patent Literature 1, it is needed that the gas having passed through a red-hot coke layer in the cooling chamber is sucked by some means from the cooling chamber in the carbonization furnace, and the gas is adjusted in flow rate and temperature and is increased in pressure to meet a pressure necessary for blowing the gas into a low-temperature carbonization chamber tuyere. Accordingly, to conduct the pressure increase in an economical facility, there has been suggested a method by which part of furnace top gas is increased in pressure by a blower, the pressure-increased gas is used as a driver gas to suck a cooling chamber outlet gas, and an ejector is utilized to supply the discharged gas to a lower-temperature carbonization chamber tuyere (see Patent Literature 2).

FIG. 5 is a simplified diagram of FIG. 1 in Patent Literature 2. The continuous formed coke production method disclosed in Patent Literature 2 will be described with reference to FIG. 5. An agglomerated coal 101 is fed into a vertical shaft furnace 105, which is formed with a low-temperature carbonization chamber 102, a high-temperature carbonization chamber 103, and a cooling chamber 104, from a furnace top into a furnace inside, and is carbonized by a heating thermal medium gas introduced from tuyeres 106 and 107 in the course of descending in the furnace. Further, the carbonized agglomerated coal 101 is cooled by a cooling gas introduced from a cooling gas introduction port 108 and discharged from a discharge port 109, and then is discharged as formed coke 110 from the lower part of the carbonization furnace.

Meanwhile, the gas extracted from the furnace top is cooled by a direct cooler 111 and an indirect cooler 112, and is increased in pressure by a blower not illustrated, and then a part of the gas is guided as a recovery gas to outside the system and the remaining part of the gas is circulated as a circulating gas in the system. In addition, a part of the circulating gas is introduced as a cooling gas from the cooling gas introduction port 108 into the cooling chamber 104. Another part of the circulating gas is increased in pressure by a blower not illustrated, and is introduced as a high-temperature carbonization thermal medium gas heated by a heater 115, from the tuyere 107 into the carbonization furnace. The remaining part of the circulating gas is adjusted in pressure, flow rate, and temperature, by a blower not illustrated and a heater 117, and is guided to an ejector 118 as a drive gas for the ejector 118. The ejector 118 sucks a cooling zone outlet gas from the discharge port 109, and mixes the sucked gas with the drive gas, and increases the mixed gas in pressure, and introduces the gas as a low-temperature carbonization thermal medium gas from the tuyere 106 into the carbonization furnace.

Takashi Anyashiki ET AL., "Development of Carbon Iron Composite Process",JFE TECHNICAL REPORT, 1 May 2009, describes the development of Carbon Iron Composite Process.

### Citation List

### Patent Literature

Patent Literature 1: JP 56-47234 B
Patent Literature 2: JP 60-6390 B
Non Patent Literature 1: "Kokusu Gijutsu Nenpou (Annual Report on Coke Technology)" Fuel Society of Japan, pp. 33 to 51, 1958

### Summary

### Technical Problem

As disclosed in Non Patent Literature 1, there has been examined a ferrocoke production method including a forming step of agglomerating coal and a carbonization step of, after the forming step, carbonizing the agglomerated coal in a general chamber-type coke furnace, thereby obtaining ferrocoke products.

However, the general chamber-type coke furnace is made of silica bricks, and thus if iron ore is fed into the furnace, the iron ore reacts with silica as a main ingredient of the silica bricks to generate lower-melting-point firelight, which leads to damage of the silica bricks. Therefore, the technique of producing ferrocoke in a chamber-type coke furnace is industrially not utilized under actual circumstances.

In the example shown in Patent Literature 2, a vertical shaft furnace is used for continuous production of formed coke, not for production of ferrocoke. However, since the vertical shaft furnace as disclosed in Patent Literature 2 is made of chamotte bricks, not silica bricks, as described above, it is therefore considered that, if the vertical shaft furnace is used for production of ferrocoke, the problem with the general chamber-type coke furnace using silica bricks will not arise in the vertical shaft furnace. Accordingly, it is conceived that the vertical shaft furnace made of chamotte bricks disclosed in Patent Literature 2, for example, is used at the carbonization step of ferrocoke production. However, even if the vertical shaft furnace disclosed in Patent Literature 2 is applied to production of ferrocoke, the following various problems remain unsolved.

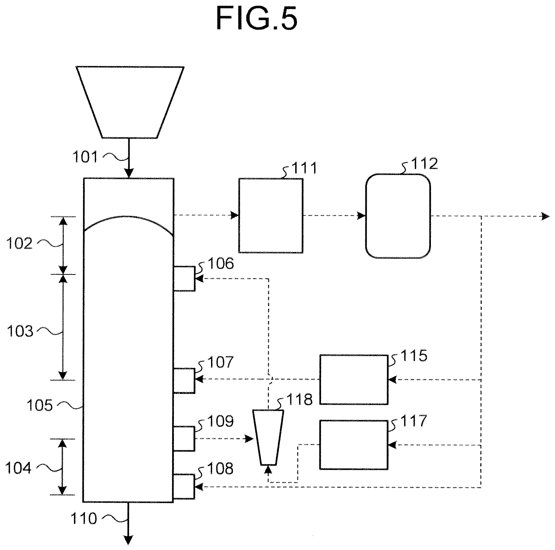

First, in the vertical shaft furnace of Patent Literature 2, it is necessary to use the ejector 118 or the like to extract a gas from the discharge port 109 for extracting a cooling gas provided at the middle of the main body of the vertical shaft furnace 105 as illustrated in FIG. 5, which results in a complicated facility. In addition, operational conditions become complicated, such as conditions for a gas balance between a cooling gas discharged from the discharge port 109 and a high-temperature carbonization thermal medium gas supplied from the tuyere 107 positioned above the discharge port 109 to the high-temperature carbonization chamber 103, flow rate control, and the like. Further, the gas extracted from the discharge port 109 is a high-temperature gas increased in temperature by thermal exchange with the high-temperature coke after carbonization. However, in the arrangement of Patent Literature 2, the high-temperature gas is introduced for reuse from the tuyere 106 into the low-temperature carbonization chamber 102, and therefore, thermal loss may be generated in the course of the introduction. In future iron-producing process, energy saving will be unavoidable and a design concept for lowering energy necessary for production of ferrocoke as much as possible will be required. Therefore, the generation of thermal loss is not considered to be expedient.

At production of ferrocoke, reduction of iron oxide is necessary as well as carbonization of coal, which requires a larger amount of heat at a high-temperature part in which reduction of iron oxide is activated, as compared with production of formed coke. Accordingly, it is not considered to be expedient in heat balance to extract a high-temperature gas once to the outside of the furnace and then reuse the extracted gas in the low-temperature carbonization chamber 102 (at the intermediate part of the carbonization furnace), as in the production of formed coke described in Patent Literature 2. In addition, in the production of ferrocoke, the reduction of an iron-containing substance is needed, and therefore the conventional method for production of formed coke cannot be used as it is, and it is also necessary to reconsider operational specifications including amount of gas to be distributed to the tuyeres and the like.

As in the foregoing, there are various problems to be solved for using the vertical shaft furnace disclosed in Patent Literature 2 as a carbonization furnace at production of ferrocoke. In addition, some of these problems arise not only in the case of using the vertical shaft furnace as a carbonization furnace at production of ferrocoke, but also the cases of using the vertical shaft furnace as a combustion/gasification furnace that subjects a burden material such as coal or waste stuff to combustion and gasification, a gasification furnace that subjects plastic, biomass, or the like to gasification, a reduction furnace that reduces metallic oxide, and a melting furnace that melts scraps or the like, for example.

The present invention is devised in light of the foregoing problems, and an object of the present invention is to provide a vertical shaft furnace that allows a simplified facility and uncomplicated operational conditions. In addition, another object of the present invention is to provide a ferrocoke production facility and a ferrocoke production method that, when a vertical shaft furnace is used as a carbonization furnace for metallurgical ferrocoke, achieves simplification of a facility and operation and reduction of energy usage.

### Solution to Problem

To solve the problem described above and achieve the object, a ferrocoke production facility according to the invention includes a vertical shaft furnace that subjects an object fed from a furnace top to combustion, gasification, carbonization, or reduction, thereby to continuously produce a target product, wherein high-temperature gas injection tuyeres configured to inject high-temperature gases of the same temperature are provided in a plurality of stages along furnace length to form a high-temperature soaking zone with a predetermined length below an intermediate position of the furnace along furnace length, wherein the predetermined length of the high-temperature soaking zone is set to 8 to 33% of the furnace length, and wherein a briquetted material of a coal-containing substance and an iron-containing substance is fed from the furnace top part of the vertical shaft furnace to continuously produce ferrocoke as a product.

To solve the problem described above and achieve the object, a ferrocoke production method for producing ferrocoke according to the present invention uses a ferrocoke production facility comprising a vertical shaft furnace that subjects a burden material fed from a furnace top to combustion, gasification, carbonization, or reduction, thereby to continuously produce a target product, provided with a briquetted material feeder for feeding a briquetted material of a coal-containing substance and an iron-containing substance from the furnace top part of the vertical shaft furnace to continuously produce ferrocoke as a product, further comprising: a plurality of high-temperature gas injection tuyeres, from which high-temperature gases of the same temperature are injected, that is provided along furnace length and injects a high-temperature gas to form a high-temperature soaking zone with a predetermined length below an intermediate position of the furnace along furnace length; a low-temperature gas injection tuyere that is provided above a central position of the furnace along furnace length to inject a low-temperature gas; a cooling gas injection tuyere that is provided below the high-temperature injection tuyeres to inject a cooling gas; and a process gas discharge port that is provided at a furnace top part and discharges a process gas, wherein a briquetted material of a carbon-containing substance and an iron-containing substance is fed from the furnace top part; a low-temperature gas for carbonizing the briquetted material is injected from the low-temperature gas injection tuyere; a gas higher in temperature than the low-temperature gas is injected from the high-temperature gas injection tuyeres; a cooling gas for cooling ferrocoke as a product is injected from the cooling gas injection tuyere; and a gas is discharged from the process gas discharge port at the furnace top part; and the predetermined length of the high-temperature soaking zone is set to 8 to 33% of the furnace length.

### Advantageous Effects of Invention

According to the ferrocoke production facility comprising a vertical shaft furnace of the present invention, it is possible to provide a vertical shaft furnace that allows a simplified facility and uncomplicated operational conditions. In addition, according to the ferrocoke production facility and the ferrocoke production method of the present invention, it is possible to provide a ferrocoke production facility and a ferrocoke production method that allows simplification of a facility and operation and reduction of energy usage when a vertical shaft furnace is used as a carbonization furnace for metallurgical ferrocoke.

### Brief Description of Drawings

FIG. 1 is an explanatory diagram explaining a background to devising of the invention, and is a graph showing temperature distribution of a briquetted material in a furnace in a one-dimensional numerical model in which high-temperature gas injection tuyeres are arranged in two stages.
FIG. 2 is an explanatory diagram explaining a background to devising of the present invention, and is a graph showing temperature distribution of a briquetted material in a furnace in a one-dimensional numerical model in which a high-temperature gas injection tuyere is arranged in one stage.
FIG. 3 is a schematic view of a ferrocoke production facility according to an embodiment of the present invention.
FIG. 4 is an explanatory diagram explaining an outline of a ferrocoke producing test device used in an example of the present invention.
FIG. 5 is an explanatory diagram explaining an outline of a vertical shaft furnace disclosed in Patent Literature 2.

### Description of Embodiments

A vertical shaft furnace in an embodiment of the present invention used as a ferrocoke production facility will be described below with reference to the drawings.

### [General description of the invention]

First, the background to devising of the invention will be described below in detail, in the case of producing ferrocoke, for example. The inventors conceived that it is desired to use a vertical shaft furnace with a cooling function, not a chamber-type coke furnace, to produce ferrocoke by forming a briquetted material from a material including a carbon-containing substance, an iron-containing substance, and a binder, and carbonizing the briquetted material. In the following description, coal as a carbon material is used as the carbon-containing substance, and iron ore (mineral ore) is used as the iron-containing substance.

At production of ferrocoke, a certain amount of heat is necessary not only for carbonization of coal but also reduction of contained mineral ore. Therefore, it is considered that the operational specifications for production of formed coke cannot be applied as they are to production of ferrocoke. Accordingly, the inventors examined operational specifications for a vertical shaft furnace at production of ferrocoke, by investigation on basic furnace characteristics in carbonization and reduction and simulation of a carbonization furnace based on investigation results.

First, the inventors investigated reduction behavior of iron ore in the course of carbonization of a briquetted material, as basic characteristics. Reduction of iron oxide in the process of ferrocoke production can be roughly classified into direct reduction by solid carbon (see Equation (1) below) and gas reduction by an H₂ gas and a CO gas resulting from coal (see Equations (2) and (3) below).

Fe₂O₃ + 3C → 2Fe + 3CO - ΔH₂₉₈ = -676.1 (kcal/kg-Fe₂O₃) (1)

Fe₂O₃ + 3H₂ → 2Fe + 3H₂O - ΔH₂₉₈ = -142.5 (kcal/kg-Fe₂O₃) (2)

Fe₂O₃ + 3CO → 2Fe + 3CO₂ - ΔH₂₉₈ = +42.0 (kcal/kg-Fe₂O₃) (3)

The direct reduction in Equation (1) involves large endothermic reaction. In a batch-type small furnace, a briquetted material of coal and iron ore was carbonized by increasing a temperature with distribution of N₂, and the foregoing reduction mode was analyzed from a composition of an exhaust gas. As a result, it has been revealed that, when the briquetted material is at a temperature of 800°C or more, the ratio of direct reduction by C (Equation (1)) rose sharply, and the amount of heat absorbed at reduction increased. Therefore, production of ferrocoke requires an operational design in which endothermic reaction with the briquetted material at a temperature of 800°C or more is compensated for.

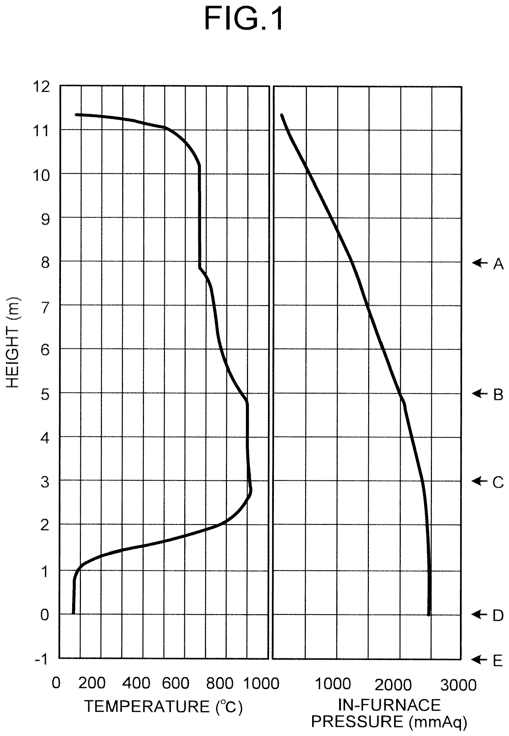

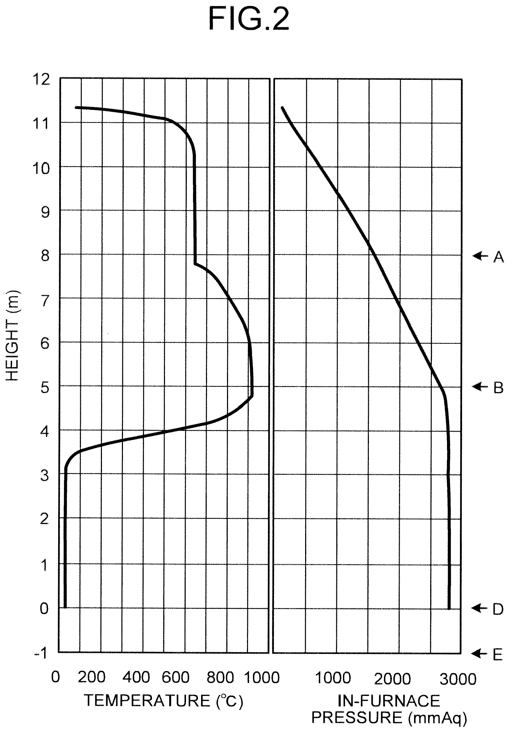

Next, the inventors estimated temperature distribution in the furnace by a one-dimensional numeric model. FIG. 1 illustrates results of calculation in the case of using a ferrocoke production facility of the invention without a cooling gas extraction tuyere and with high-temperature gas injection tuyeres in two stages. FIG. 2 illustrates results of calculation in the case of using a ferrocoke production facility without a cooling gas extraction tuyere and with a high-temperature gas injection tuyere in one stage.

FIGS. 1 and 2 illustrate results of calculation of gas conditions meeting target temperature distribution with a region in which the briquetted material is at a temperature of 900°C for one to two hours. In FIG. 1, code A denotes the position of a low-temperature gas injection tuyere through which a 600°C gas of 800 Nm³/t is injected; B the position of a high-temperature gas injection tuyere through which a 990°C gas of 950 Nm³/t is injected; C the position of a high-temperature gas injection tuyere through which a 990°C gas of 950 Nm³/t is injected, as with B; D the position of a cooling gas injection tuyere through which a 35°C gas of 1987 Nm³/t is injected; and E the position of a ferrocoke discharge port. In FIG. 2, code A denotes the position of a low-temperature gas injection tuyere through which a 500°C gas of 1200 Nm³/t is injected; B the position of a high-temperature gas injection tuyere through which a 980°C gas of 2400 Nm³/t is injected; D the position of a cooling gas injection tuyere through which a 35°C gas of 1983 Nm³/t is injected; and E the position of a ferrocoke discharge port.

In the case of the facility with the high-temperature gas injection tuyere in one stage, there exists, in a region where the briquetted material is at a temperature of 900°C between the low-temperature gas injection tuyere and the high-temperature gas injection tuyere, a zone in which the temperature can be held for about one hour. In this case, however, a large amount of gas is needed at the high-temperature gas injection tuyere, and also gas supply to the low-temperature gas injection tuyere is necessary to decrease the temperature of the furnace top to a predetermined temperature, which leads to an increased amount of gas at the furnace top. Accordingly, the pressure in the furnace becomes higher, and therefore the facility cannot be said to be economical. Meanwhile, in the case of the facility with the high-temperature gas injection tuyeres in two stages, the amount of gas is smaller at the tuyeres and the pressure in the furnace is lower.

In a manner as described above, by arranging the high-temperature gas injection tuyeres in two stages to form a high-temperature soaking zone between the high-temperature gas injection tuyeres in the furnace, it is possible to reduce the amount of gas and hold the pressure in the furnace at a low level.

The invention is devised based on the foregoing knowledge obtained by the results of experiments, and specifically, the invention is configured as described below.

### [Configuration of the ferrocoke production facility]

In an embodiment, a vertical shaft furnace is used to continuously carbonize a briquetted material of a carbon-containing substance and an iron-containing substance, thereby to produce ferrocoke in which metallic iron is generated in coke. The ferrocoke production facility is configured such that a vertical shaft furnace has an area under a stockline level (material charging reference level), which is below a process gas discharge port, is divided into a low-temperature carbonization zone, a high-temperature carbonization zone, and a cooling zone. The low-temperature carbonization zone covers from the stockline level (material insertion reference level) to a low-temperature gas injection tuyere, and the high-temperature carbonization zone covers from the low-temperature gas injection tuyere to a high-temperature gas injection tuyere, which is in the lower stage along furnace length, and the cooling zone covers from the high-temperature gas injection tuyere in the lower stage to a cooling gas injection tuyere. The ferrocoke production facility is structured so as to supply a heat medium gas from four parts: a lower part of the low-temperature carbonization zone, an intermediate part and lower part of the high-temperature carbonization zone, and a lower part of the cooling zone, and discharges a process gas only from the furnace top part. As in the foregoing, the ferrocoke production facility can be simplified by eliminating a cooling gas extraction tuyere provided at a conventional formed coke production facility.

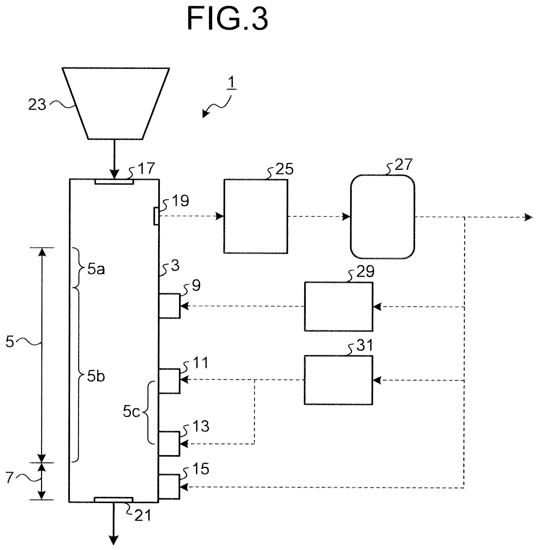

FIG. 3 is a configuration example of the ferrocoke production facility according to the embodiment. A vertical shaft furnace 1 used in the ferrocoke production facility according to the embodiment subjects a briquetted material to carbonization and reduction in a carbonization zone 5 formed by a low-temperature carbonization zone 5a and a high-temperature carbonization zone 5b in a shaft furnace main body 3, and cools ferrocoke in a cooling zone 7 at a lower part. The vertical shaft furnace 1 has a low-temperature gas injection tuyere 9 on a side of the shaft furnace main body 3 at a position corresponding to a lower part of the low-temperature carbonization zone 5a. The vertical shaft furnace 1 has high-temperature gas injection tuyeres 11 and 13 on the side of the shaft furnace main body 3 at positions corresponding to an intermediate part and lower part of the high-temperature carbonization zone 5b. The vertical shaft furnace 1 has a cooling gas injection tuyere 15 on the side of the shaft furnace main body 3 at a position corresponding to a lower part of the cooling zone 7. The vertical shaft furnace 1 has a briquetted material feeding hole 17 and a process gas discharge port 19 for discharging a process gas at a top furnace part of the shaft furnace main body 3. The vertical shaft furnace 1 has a ferrocoke discharge port 21 for discharging ferrocoke at the lower part of the shaft furnace main body 3.

Provided above the shaft furnace main body 3 is a briquetted material feeder 23 for feeding an object into a feeding hole 17. A first circulating gas cooler 25 and a second circulating gas cooler 27 are connected to a discharge gas pipe connected to the process gas discharge port 19. A low-temperature gas heater 29 is provided to heat a circulating gas, which is cooled at the second circulating gas cooler 27, at a low temperature for use as a low-temperature gas, and a high-temperature gas heater 31 is provided to heat a circulating gas, which is cooled at the second circulating gas cooler 27, at a high temperature for use as a high-temperature gas.

### [Method for producing ferrocoke]

A method for producing ferrocoke using the thus configured ferrocoke production facility will be described. In producing ferrocoke, the briquetted material feeder 23 feeds a briquetted material generated from a carbon-containing substance and an iron-containing substance, through the feeding hole 17 of the shaft furnace main body 3. The fed briquetted material is carbonized in the carbonization zone 5 and cooled in the cooling zone 7, and then discharged as ferrocoke from the ferrocoke discharge port 21 at the lower part of the shaft furnace main body 3. The low-temperature gas heater 29 injects a heating gas (low-temperature gas) for carbonization of the briquetted material, from the low-temperature gas injection tuyere 9. The high-temperature gas heater 31 injects heating gases (high-temperature gases) for carbonization of the briquetted material, from the high-temperature gas injection tuyeres 11 and 13. The high-temperature gases injected from the high-temperature gas injection tuyeres 11 and 13 are higher in temperature than the low-temperature gas injected from the low-temperature gas injection tuyere 9. The high-temperature gases injected from the high-temperature gas injection tuyeres 11 and 13 are almost the same in temperature, thereby to form a high-temperature soaking zone between the high-temperature gas injection tuyeres in the furnace. The second circulating gas cooler 27 injects a cooling gas for cooling ferrocoke, through the cooling gas injection tuyere 15. The injected gases are discharged only from the process gas discharge port at the furnace top part. The low-temperature gas injection tuyere 9 is disposed above an intermediate position of the furnace along furnace length, and the high-temperature gas injection tuyeres 11 and 13 and the cooling gas injection tuyere 15 are disposed under the low-temperature gas injection tuyere 9.

The high-temperature gas injection tuyeres 11 and 13 for forming a high-temperature soaking zone 5c with a predetermined length in a height direction in the furnace, are placed below an intermediate position of the furnace along furnace length. The predetermined length of the high-temperature soaking zone 5c formed between the high-temperature gas injection tuyeres 11 and 13 is preferably set to 8 to 33% of a length from the stockline level (material charging reference level) to the ferrocoke discharge port 21. If the length of the high-temperature soaking zone 5c along height of the furnace is less than 8% of the furnace length, it is not possible to obtain an amount of heat required for carbonization of coal and reduction of mineral ore, which leads to deterioration in productivity. Meanwhile, if the length of the high-temperature soaking zone 5c in the height direction exceeds 33% of the furnace length, the rate of temperature rise in the low-temperature carbonization zone 5a sharply increases, which results in generation of heat cracks and insufficient cooling in the cooling zone 7. This requires a separate cooling facility subsequent to the ferrocoke discharge port 21, which thus is not economical.

A low-temperature gas injected from the low-temperature gas injection tuyere 9 is a gas for adjusting the temperature of a gas at the furnace top and the rate of temperature rise of a solid substance in the shaft furnace, and is preferably set at about 400 to 700°C. A high-temperature gas injected from the high-temperature gas injection tuyeres 11 and 13 is a gas for raising the temperature of a solid substance to the maximum temperature, and is preferably set at about 800 to 1000°C. A cooling gas injected from the cooling gas injection tuyere 15 is a gas for cooling ferrocoke produced by carbonization in the furnace, and is preferably set at about 25 to 80°C.

The process gas discharged from the process gas discharge port 19 at the furnace top part is cooled by the first circulating gas cooler 25 and the second circulating gas cooler 27, and some part of the gas is heated by the low-temperature gas heater 29 and is injected into the furnace from the low-temperature gas injection tuyere 9. Another part of the gas is heated by the high-temperature gas heater 31 and is injected into the furnace from the high-temperature gas injection tuyeres 11 and 13. The remaining part of the gas is injected into the furnace from the cooling gas injection tuyere 15.

As in the foregoing, used in the embodiment is the vertical shaft furnace 1 having four-stage tuyeres in positions at different heights and not having a gas discharge port other than that at the furnace top part. A low-temperature gas is injected from the low-temperature gas injection tuyere 9 disposed under the low-temperature carbonization zone 5a. A high-temperature gas is injected from the high-temperature gas injection tuyeres 11 and 13 disposed at the intermediate part and the lower part of the high-temperature carbonization zone 5b. A cooling gas is injected from the cooling gas injection tuyere 15 disposed at the lower part of the cooling zone 7. In this manner, a briquetted material of a carbon-containing substance and an iron-containing substance is continuously carbonized to produce ferrocoke.

In the embodiment, a process gas is discharged only from the furnace top part, which eliminates the need for a complicated operation as disclosed in Patent Literature 2 where a gas extracted by an ejector and a gas discharged from the furnace top are mixed and then the mixed gas is returned into the furnace as a heating thermal medium gas. In the embodiment, a gas flows in the furnace in one direction from the lower part to the upper part of the furnace, which simplifies a facility and eliminates a complicated operation such as regulation of a gas flow rate for adjusting a gas temperature at the cooling gas injection tuyere 15. In the embodiment, the high-temperature gas injection tuyeres are provided in two stages to form the high-temperature soaking zone 5c between the high-temperature gas injection tuyeres in the height direction. This structure can be said to be suitable for production of ferrocoke requiring carbonization of coal and reduction of iron oxide.

In the foregoing embodiment, a high-temperature gas heated by the high-temperature gas heater 31 is bifurcated in midstream so as to be supplied to both of the high-temperature gas injection tuyeres 11 and 13. Accordingly, the gases supplied to the high-temperature gas injection tuyeres 11 and 13 become approximately identical in temperature, which facilitates formation of the high-temperature soaking zone 5c between the high-temperature gas injection tuyeres in the furnace. Even if gases identical in temperature are injected from the high-temperature gas injection tuyeres 11 and 13, the burden material moves downward while being supplied with heat from above, and causes reduction reaction of iron ore. Accordingly, the lower part of the furnace is slightly higher in temperature than the upper part of the same, and technically, there is a temperature gradient between the upper and lower parts of the furnace. Therefore, the formation of the high-temperature soaking zone described herein refers to not formation of a strictly identical temperature range but formation of a meaningful temperature range as a temperature range required for raising the temperature of the burden material to the maximum temperature. It is acceptable if the temperature of the burden material falls within a range of 800 to 1000°C, for example.

High-temperature gases injected from the high-temperature gas injection tuyeres 11 and 13 may not necessarily be identical in temperature. For example, the temperature of a gas injected from the upper high-temperature gas injection tuyere 11 may be higher than the temperature of a gas injected from the lower high-temperature gas injection tuyere 13. To adjust the gas temperature, for example, a high-temperature gas to be injected from the tuyere 13 at a relatively lower temperature may be mixed with a low-temperature gas before injection to adjust the temperature of the injected gas. Specifically, a pipe is disposed to mix part of a low-temperature gas discharged from the low-temperature gas heater 29 into a high-temperature gas to be supplied to the tuyere 13, such that the pipe is provided with a flow regulation valve. The flow regulation valve and the pipe function as a flow rate adjustment device in the invention.

High-temperature gases injected from the high-temperature gas injection tuyeres 11 and 13 may not necessarily be identical in flow rate. To form a predetermined temperature range, the high-temperature gas injection tuyeres 11 and 13 may have a difference in gas flow therebetween. To provide a gas flow difference, the pipes supplying high-temperature gases to the tuyeres 11 and 13 may be provided with flow regulation valves. The flow regulation valves function as a flow rate adjustment device in the invention.

By allowing high-temperature gases injected from the tuyeres 11 and 13 to be adjusted in flow rate and temperature, the briquetted material in the furnace can be controlled in temperature. For more reliable temperature control, a temperature measurement device for measuring gas temperatures is preferably provided between the tuyeres to adjust the flow rates and temperatures of high-temperature gases injected from the tuyeres 11 and 13, based on measurement values from the temperature measurement device. For example, the temperature measurement device measuring the temperature of the briquetted material may be configured to have a thermocouple or the like inserted into near the furnace wall to prevent occurrence of damage due to falling of the burden material.

By allowing adjustment of a gas flow rate, the following operations can be achieved. To facilitate cooling of ferrocoke, the flow rate of a gas injected into the lower high-temperature gas injection tuyere 13 may be made lower than the flow rate of a gas injected into the upper high-temperature gas injection tuyere 11, which makes it possible to form a predetermined temperature range at the upper part and make the cooling zone 7 longer along the furnace length. By providing the high-temperature gas injection tuyeres in two stages, it is possible to suppress all the flow rates of injected gases and reduce the scale of a facility for a gas processing system.

As apparent from the foregoing description, the vertical shaft furnace according to the invention includes the high-temperature gas injection tuyeres in a plurality of stages along the furnace length to form the high-temperature soaking zone with a predetermined length below the intermediate position of the furnace along the furnace length. Accordingly, even if the burden material to be processed causes large endothermic reaction associated with reduction reaction or the like, it is possible to supply an amount of heat compensating for the endothermic reaction, thereby producing a desired product in a stable manner. According to the ferrocoke production facility of the invention, it is possible to realize simplification of facility and operation and reduction of energy consumption, thereby resulting in continuous ferrocoke production. This allows highly reactive ferrocoke to be used in blast furnace operation, which is effective in decrease of reduction material ratio.

### Examples

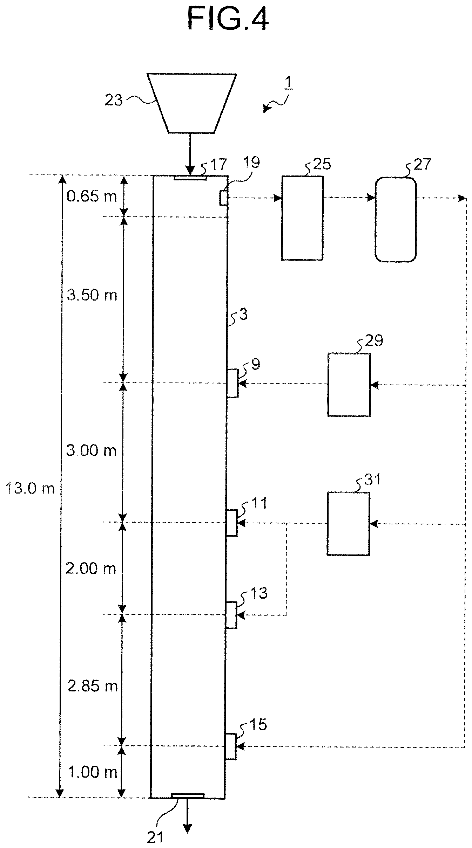

To ascertain the advantages of the invention, the ferrocoke production test device illustrated in FIG. 4 was used to conduct a ferrocoke production test with high-temperature gas injection tuyeres in two stages and with a high-temperature gas injection tuyere in one stage. The same components illustrated in FIG. 4 as those in FIG. 1 are given the same reference numerals as those shown in FIG. 1. The vertical shaft furnace illustrated in FIG. 4 is 13.0 m in entire length, 0.65 m from a furnace upper end surface to the stockline level, 3.5 m from the stockline level to the center of the low-temperature gas injection tuyere 9, 3.0 m from the center of the low-temperature gas injection tuyere 9 to the center of the high-temperature gas injection tuyere 11 in the upper stage, 2.0 m from the center of the high-temperature gas injection tuyere 11 to the center of the high-temperature gas injection tuyere 13 in the lower stage, 2.85 m from the center of the high-temperature gas injection tuyere 13 in the lower stage to the center of the cooling gas injection tuyere, and 1.0 m from the center of the cooling gas injection tuyere to the discharge port 21. The vertical shaft furnace 1 has a cross section area of 1.67 m², and the descending speed of the burden material descends is 1.6 m/h. Table 1 shows operational specifications for production of ferrocoke, and Table 2 shows properties of produced ferrocoke.

**Table 1**

| | High-temperature gas injection tuyeres in two stages | | High-temperature gas injection tuyere in one stage | |
|---|---|---|---|---|
| | Gas amount Nm³/hr | Gas temperature °C | Gas amount Nm³/hr | Gas temperature °C |
| Low-temperature gas injection tuyere | 800 | 600 | 1200 | 500 |
| High-temperature gas injection tuyere | 950 | 990 | 2400 | 980 |
| High-temperature gas injection tuyere | 950 | 990 | - | - |
| Cooling gas injection tuyere | 1987 | 35 | 1983 | 35 |

**Table 2**

| | High-temperature gas injection tuyeres in two stages | High-temperature gas injection tuyere in one stage |
|---|---|---|
| Strength after carbonization DI150/6(-) | 82.8 | 82.2 |
| Rate of reduction (%) | 84.2 | 78.1 |

At the temperature and the descending speed used in the ferrocoke manufacture test device, the strength after carbonization is indicated by drum strength index, and the target value of DI 150/6 (6 mm index after 150 revolutions) is set at 82. The target value of rate of reduction is set at 80%. As shown in Table 2, both the strength and the rate of reduction exceeded the target values with the high-temperature gas injection tuyeres in two stages, whereas the strength exceeded the target value but the rate of reduction did not reach the target value with the high-temperature gas injection tuyere in one stage. It is considered that this is because gas retention time was not sufficiently provided in a temperature range of 900°C, which held the rate of reduction at a low level.

The foregoing experiment has revealed that providing the high-temperature gas injection tuyeres in two stages to form the high-temperature soaking zone in the furnace makes it possible to realize stable production of ferrocoke involving large endothermic reaction.

In the foregoing example, the high-temperature gas injection tuyeres are provided in two stages. Alternatively, the high-temperature gas injection tuyeres may be provided in three or more stages. In the foregoing example, the high-temperature gas injection tuyeres 11 and 13 are placed below the intermediate position of the furnace along the furnace length to form the high-temperature soaking zone. Alternatively, as far as the high-temperature soaking zone is formed below the intermediate position of the furnace along the furnace length, the upper high-temperature gas injection tuyere 11 may be placed at a height above the intermediate position of the furnace along the furnace length, by controlling the direction of injecting a high-temperature gas, for example.

From the foregoing test results of the examples, it is understood that the advantages of forming the high-temperature soaking zone with the high-temperature gas injection tuyeres in two stages is provided not only when the vertical shaft furnace is used as a carbonization furnace at production of ferrocoke. The advantages can also be provided when the vertical shaft furnace is used as a combustion/gasification furnace for subjecting a burden material such as coal and waste material, for example, to combustion and gasification, a gasification furnace for subjecting plastic or biomass to gasification, a reduction furnace for reducing metallic oxide, and a fusing furnace for fusing scraps or the like.

As in the foregoing, the embodiment to which the invention devised by the inventor is applied is described. However, the invention is not limited to by the description of the embodiment and the drawings constituting part of disclosure of the present invention. That is, other embodiments, examples, operational techniques, and the like accomplished by a person skilled in the art based on the foregoing embodiment, fall within the scope of the invention.

### Industrial Applicability

The present invention is applicable to a vertical shaft furnace continuously producing a desired product by subjecting a burden material fed from a furnace top to combustion, gasification, carbonization, or reduction, and a ferrocoke production facility including the vertical shaft furnace for production of ferrocoke, and a ferrocoke production method.

### Reference Signs List

- 1: VERTICAL SHAFT FURNACE
- 3: SHAFT FURNACE MAIN BODY
- 5: CARBONIZATION ZONE
5a LOW-TEMPERATURE CARBONIZATION ZONE
5b HIGH-TEMPERATURE CARBONIZATION ZONE
5c HIGH-TEMPERATURE SOAKING ZONE
- 7: COOLING ZONE
- 9: LOW-TEMPERATURE GAS INJECTION TUYERE
- 11, 13: HIGH-TEMPERATURE GAS INJECTION TUYERE
- 15: COOLING GAS INJECTION TUYERE
- 17: FEEDING HOLE
- 19: PROCESS GAS DISCHARGE PORT
- 21: FERROCOKE DISCHARGE PORT
- 23: BRIQUETTED MATERIAL FEEDER
- 25: FIRST CIRCULATING GAS COOLER
- 27: SECOND CIRCULATING GAS COOLER
- 29: LOW-TEMPERATURE GAS HEATER
- 31: HIGH-TEMPERATURE GAS HEATER

## Claims

1. A ferrocoke production facility comprising a vertical shaft furnace (1) that subjects a burden material fed from a furnace top to combustion, gasification, carbonization, or reduction, thereby to continuously produce a target product, provided with a briquetted material feeder (23) for feeding a briquetted material of a coal-containing substance and an iron-containing substance from the furnace top part of the vertical shaft furnace (1) to continuously produce ferrocoke as a product, wherein high-temperature gas injection tuyeres (11, 13) configured to inject high-temperature gases of the same temperature are provided in a plurality of stages along furnace length to form a high-temperature soaking zone (5c) with a predetermined length below an intermediate position of the furnace along furnace length, **characterized in that**
the predetermined length of the high-temperature soaking zone (5c) is set to 8 to 33% of the furnace length.

2. The ferrocoke production facility according to claim 1, wherein the ferrocoke production facility is configured so that a high-temperature gas heated by a high-temperature gas heater (31) is bifurcated in midstream so as to be supplied to the high-temperature gas injection tuyeres (11, 13) provided in the plurality of stages.

3. The ferrocoke production facility according to claim 1, wherein a flow rate adjustment device is provided at the vertical shaft furnace (1), to adjust a flow rate of a high-temperature gas to be supplied to the high-temperature gas injection tuyeres (11, 13) provided in the plurality of stages.

4. The ferrocoke production facility according to claim 1 or 3, wherein a gas temperature adjustment device is provided at the vertical shaft furnace (1), to adjust a temperature of a high-temperature gas to be supplied to the high-temperature gas injection tuyeres (11, 13) provided in the plurality of stages.

5. The ferrocoke production facility according to claim 3 or 4, wherein a temperature measurement device is provided at the vertical shaft furnace (1), to measure a temperature of the high-temperature soaking zone (5c).

6. The ferrocoke production facility according to any one of claims 1 or 3 to 5, wherein a low-temperature gas injection tuyere (9) for injecting a low-temperature gas is provided at the vertical shaft furnace (1) above the intermediate position of the furnace along furnace length.

7. The ferrocoke production facility according to any one of claims 1 or 3 to 6, wherein the high-temperature gas injection tuyeres (11, 13) are provided in two stages at the vertical shaft furnace (1).

8. The ferrocoke production facility according to any one of claims 1 or 3 to 7, the vertical shaft furnace (1) comprising a cooling gas injection tuyere (15) that is provided below the high-temperature gas injection tuyere (13) and injects a cooling gas; and a process gas discharge port (19) that is provided only at a furnace top part and discharges a process gas.

9. The ferrocoke production facility according to claim 8, comprising a discharge gas circulation device configured to inject a gas discharged from the process gas discharge port (19) into the furnace through the low-temperature gas tuyere (9), the high-temperature gas injection tuyeres (11, 13), and the cooling gas injection tuyere (15).

10. A ferrocoke production method for producing ferrocoke using a ferrocoke production facility comprising a vertical shaft furnace (1) that subjects a burden material fed from a furnace top to combustion, gasification, carbonization, or reduction, thereby to continuously produce a target product, provided with a briquetted material feeder (23) for feeding a briquetted material of a coal-containing substance and an iron-containing substance from the furnace top part of the vertical shaft furnace (1) to continuously produce ferrocoke as a product,
further comprising: a plurality of high-temperature gas injection tuyeres (11, 13), from which high-temperature gases of the same temperature are injected, that is provided along furnace length and injects a high-temperature gas to form a high-temperature soaking zone (5c) with a predetermined length below an intermediate position of the furnace along furnace length; a low-temperature gas injection tuyere (9) that is provided above a central position of the furnace along furnace length to inject a low-temperature gas; a cooling gas injection tuyere (15) that is provided below the high-temperature injection tuyeres (11, 13) to inject a cooling gas; and a process gas discharge port (19) that is provided at a furnace top part and discharges a process gas, wherein
a briquetted material of a carbon-containing substance and an iron-containing substance is fed from the furnace top part;
a low-temperature gas for carbonizing the briquetted material is injected from the low-temperature gas injection tuyere (9);
a gas higher in temperature than the low-temperature gas is injected from the high-temperature gas injection tuyeres (11, 13);
a cooling gas for cooling ferrocoke as a product is injected from the cooling gas injection tuyere (15); and
a gas is discharged from the process gas discharge port (19) at the furnace top part,
and the predetermined length of the high-temperature soaking zone (5c) is set to 8 to 33% of the furnace length.

## Patentansprüche

1. Eisenkoks-Herstellungsanlage, umfassend einen Vertikalschachtofen (1), der ein Möllergut, das von einer Ofenoberseite zugeführt wird, Verbrennung, Vergasung, Verkohlung oder Reduktion unterzieht, um dadurch kontinuierlich ein Zielprodukt zu erzeugen, und der mit einer Brikettmaterial-Zuführungsvorrichtung (23) versehen ist, um ein brikettiertes Material aus einer Kohle enthaltenden Substanz und einer Eisen enthaltenden Substanz von dem ofenoberseitigen Teil des Vertikalschachtofens (1) zuzuführen und kontinuierlich Eisenkoks als Produkt herzustellen, wobei Hochtemperatur-Gaseinblasdüsen (11, 13), die dazu ausgelegt sind, Hochtemperaturgase mit derselben Temperatur einzublasen, in einer Vielzahl von Stufen entlang der Ofenlänge bereitgestellt sind, um eine Hochtemperatur-Durchwärmungszone (5c) mit einer vorgegebenen Länge unterhalb einer mittleren Position des Ofens entlang der Ofenlänge zu bilden, **dadurch gekennzeichnet, dass**
die vorgegebene Länge der Hochtemperatur-Durchwärmungszone (5c) auf 8 bis 33 % der Ofenlänge festgelegt wird.

2. Eisenkoks-Herstellungsanlage nach Anspruch 1, wobei die Eisenkoks-Herstellungsanlage so konfiguriert ist, dass ein Hochtemperaturgas, das durch eine Hochtemperatur-Gasbeheizung (31) erwärmt wird, in der Strommitte gegabelt wird, um zu den Hochtemperatur-Gaseinblasdüsen (11, 13) geleitet zu werden, die in der Vielzahl von Stufen bereitgestellt sind.

3. Eisenkoks-Herstellungsanlage nach Anspruch 1, wobei eine Strömungsgeschwindigkeits-Anpassungsvorrichtung an dem Vertikalschachtofen (1) bereitgestellt ist, um eine Strömungsgeschwindigkeit eines Hochtemperaturgases anzupassen, das zu den Hochtemperatur-Gaseinblasdüsen (11, 13) geleitet werden soll, die in der Vielzahl von Stufen bereitgestellt sind.

4. Eisenkoks-Herstellungsanlage nach Anspruch 1 oder 3, wobei eine Gastemperatur-Anpassungsvorrichtung an dem Vertikalschachtofen (1) bereitgestellt ist, um eine Temperatur eines Hochtemperaturgases anzupassen, das zu den Hochtemperatur-Gaseinblasdüsen (11, 13) geleitet werden soll, die in der Vielzahl von Stufen bereitgestellt sind.

5. Eisenkoks-Herstellungsanlage nach Anspruch 3 oder 4, wobei eine Temperaturmessungsvorrichtung an dem Vertikalschachtofen (1) bereitgestellt ist, um eine Temperatur der Hochtemperatur-Durchwärmungszone (5c) zu messen.

6. Eisenkoks-Herstellungsanlage nach einem der Ansprüche 1 oder 3 bis 5, wobei eine Niedertemperatur-Gaseinblasdüse (9) zum Einblasen eines Niedertemperaturgases an dem Vertikalschachtofen (1) oberhalb der mittleren Position des Ofens entlang der Ofenlänge bereitgestellt ist.

7. Eisenkoks-Herstellungsanlage nach einem der Ansprüche 1 oder 3 bis 6, wobei die Hochtemperatur-Gaseinblasdüsen (11, 13) in zwei Stufen an dem Vertikalschachtofen (1) bereitgestellt sind.

8. Eisenkoks-Herstellungsanlage nach einem der Ansprüche 1 oder 3 bis 7, wobei der Vertikalschachtofen (1) eine Kühlgaseinblasdüse (15) umfasst, die unterhalb der Hochtemperatur-Gaseinblasdüse (13) bereitgestellt ist und ein Kühlgas einbläst; und eine Prozessgas-Ausstoßöffnung (19), die nur an dem ofenoberseitigen Teil bereitgestellt ist und ein Prozessgas ausstößt.

9. Eisenkoks-Herstellungsanlage nach Anspruch 8, umfassend eine Ausstoßgas-Zirkulationsvorrichtung, die dazu ausgelegt ist, ein Gas, das aus der Prozessgas-Ausstoßöffnung (19) ausgestoßen wird, in den Ofen durch die Niedertemperatur-Gaseinblasdüse (9), die Hochtemperatur-Gaseinblasdüsen (11, 13) und die Kühlgaseinblasdüse (15) einzublasen.

10. Eisenkoks-Herstellungsverfahren zum Herstellen von Eisenkoks unter Verwendung einer Eisenkoks-Herstellungsanlage, umfassend einen Vertikalschachtofen (1), der ein Möllergut, das von einer Ofenoberseite zugeführt wird, Verbrennung, Vergasung, Verkohlung oder Reduktion unterzieht, um dadurch kontinuierlich ein Zielprodukt zu erzeugen, und der mit einer Brikettmaterial-Zuführungsvorrichtung (23) versehen ist, um ein brikettiertes Material aus einer Kohle enthaltenden Substanz und einer Eisen enthaltenden Substanz von dem ofenoberseitigen Teil des Vertikalschachtofens (1) zuzuführen und kontinuierlich Eisenkoks als Produkt herzustellen,
des Weiteren umfassend: eine Vielzahl von Hochtemperatur-Gaseinblasdüsen (11, 13) von welchen Hochtemperaturgase mit derselben Temperatur eingeblasen werden, die entlang der Ofenlänge bereitgestellt sind und ein Hochtemperaturgas einblasen, um eine Hochtemperatur-Durchwärmungszone (5c) mit einer vorgegebenen Länge unterhalb einer mittleren Position des Ofens entlang der Ofenlänge zu bieten; eine Niedertemperatur-Gaseinblasdüse (9), die oberhalb einer mittleren Position des Ofens entlang der Ofenlänge bereitgestellt ist, um ein Niedertemperaturgas einzublasen; eine Kühlgaseinblasdüse (15), die unterhalb der Hochtemperatur-Gaseinblasdüsen (11, 13) bereitgestellt ist, um ein Kühlgas einzublasen; und eine Prozessgas-Ausstoßöffnung (19), die an einem ofenoberseitigen Teil bereitgestellt ist und ein Prozessgas ausstößt, wobei
ein brikettiertes Material aus einer Kohlenstoff enthaltenden Substanz und einer Eisen enthaltenden Substanz von dem ofenoberseitigen Teil zugeführt wird;
ein Niedertemperaturgas für die Verkokung des brikettierten Materials aus der Niedertemperatur-Gaseinblasdüse (9) eingeblasen wird;
ein Gas mit einer höheren Temperatur als das Niedertemperaturgas aus den Hochtemperatur-Gaseinblasdüsen (11, 13) eingeblasen wird;
ein Kühlgas zum Kühlen des Eisenkoks als ein Produkt aus der Kühlgaseinblasdüse (15) eingeblasen wird; und
ein Gas aus der Prozessgas-Ausstoßöffnung (19) an dem ofenoberseitigen Teil ausgestoßen wird, und
die vorgegebene Länge der Hochtemperatur-Durchwärmungszone (5c) auf 8 bis 33 % der Ofenlänge festgelegt wird.

## Revendications

1. Installation de production de ferrocoke comprenant un four à axe vertical (1) qui soumet un matériau de charge alimenté depuis le haut de four à une combustion, une gazéification, une carbonisation, ou une réduction, pour produire ainsi en continu un produit cible, muni d'un alimentateur en matériau briqueté (23) pour alimenter un matériau briqueté constitué d'une substance contenant du charbon et d'une substance contenant du fer depuis la partie haute de four du four à axe vertical (1) pour produire en continu du ferrocoke en tant que produit, dans lequel des tuyères d'injection de gaz à haute température (11, 13) configurées pour injecter des gaz à haute température ayant la même température sont agencées en une pluralité d'étages le long de la longueur de four pour former une zone de trempage à haute température (5c) d'une longueur prédéterminée au-dessous d'une position intermédiaire du four le long de la longueur de four, **caractérisé en ce que**
la longueur prédéterminée de la zone de trempage à haute température (5c) est établie entre 8 et 33 % de la longueur de four.

2. Installation de production de ferrocoke selon la revendication 1, dans laquelle l'installation de production de ferrocoke est configurée de sorte qu'un gaz à haute température chauffé par un dispositif de chauffage de gaz à haute température (31) est bifurqué à mi-chemin de manière à être délivré dans les tuyères d'injection de gaz à haute température (11, 13) agencées dans la pluralité d'étages.

3. Installation de production de ferrocoke selon la revendication 1, dans laquelle un dispositif d'ajustement de débit est agencé au niveau du four à axe vertical (1), pour ajuster un débit d'un gaz à haute température à délivrer dans les tuyères d'injection de gaz à haute température (11, 13) agencées dans la pluralité d'étages.

4. Installation de production de ferrocoke selon la revendication 1 ou 3, dans laquelle un dispositif d'ajustement de température de gaz est agencé au niveau du four à axe vertical (1), pour ajuster une température d'un gaz à haute température à délivrer dans les tuyères d'injection de gaz à haute température (11, 13) agencées dans la pluralité d'étages.

5. Installation de production de ferrocoke selon la revendication 3 ou 4, dans laquelle un dispositif de mesure de température est agencé au niveau du four à axe vertical (1), pour mesurer une température de la zone de trempage à haute température (5c).

6. Installation de production de ferrocoke selon l'une quelconque des revendications 1 ou 3 à 5, dans laquelle une tuyère d'injection de gaz à basse température (9) pour injecter un gaz à basse température est agencée au niveau du four à axe vertical (1) au-dessus de la position intermédiaire du four le long de la longueur de four.

7. Installation de production de ferrocoke selon l'une quelconque des revendications 1 ou 3 à 6, dans laquelle les tuyères d'injection de gaz à haute température (11, 13) sont agencées en deux étages au niveau du four à axe vertical (1).

8. Installation de production de ferrocoke selon l'une quelconque des revendications 1 ou 3 à 7, le four à axe vertical (1) comprenant une tuyère d'injection de gaz de refroidissement (15) qui est agencée au-dessous de la tuyère d'injection de gaz à haute température (13) et injecte un gaz de refroidissement ; et un orifice de décharge de gaz de traitement (19) qui est agencé uniquement au niveau d'une partie haute de four et décharge un gaz de traitement.

9. Installation de production de ferrocoke selon la revendication 8, comprenant un dispositif de circulation de gaz de décharge configuré pour injecter un gaz déchargé depuis l'orifice de décharge de gaz de traitement (19) dans le four à travers la tuyère de gaz à basse température (9), les tuyères d'injection de gaz à haute température (11, 13), et la tuyère d'injection de gaz de refroidissement (15).

10. Procédé de production de ferrocoke pour produire du ferrocoke en utilisant une installation de production de ferrocoke comprenant un four à axe vertical (1) qui soumet un matériau de charge alimenté depuis un haut de four à une combustion, une gazéification, une carbonisation, ou une réduction, pour produire ainsi en continu un produit cible, muni d'un d'alimentateur en matériau briqueté (23) pour alimenter un matériau briqueté constitué d'une substance contenant du charbon et d'une substance contenant du fer depuis la partie haute de four du four à axe vertical (1) pour produire en continu du ferrocoke en tant que produit,
comprenant en outre : une pluralité de tuyères d'injection de gaz à haute température (11, 13), à partir desquelles sont injectés des gaz à haute température ayant la même température, qui est agencée le long de la longueur de four et injecte un gaz à haute température pour former une zone de trempage à haute température (5c) d'une longueur prédéterminée au-dessous d'une position intermédiaire du four le long de la longueur de four ; une tuyère d'injection de gaz à basse température (9) qui est agencée au-dessus d'une position centrale du four le long de la longueur de four pour injecter un gaz à basse température ; une tuyère d'injection de gaz de refroidissement (15) qui est agencée au-dessous des tuyères d'injection à haute température (11, 13) pour injecter un gaz de refroidissement; et un orifice de décharge de gaz de traitement (19) qui est agencé au niveau d'une partie haute de four et qui décharge un gaz de traitement, dans lequel
un matériau briqueté constitué d'une substance contenant du carbone et d'une substance contenant du fer est alimenté à partir de la partie haute de four ;
un gaz à basse température pour carboniser le matériau briqueté est injecté à partir de la tuyère d'injection de gaz à basse température (9) ;
un gaz à une température plus élevée que le gaz à basse température est injecté à partir des tuyères d'injection de gaz à haute température (11, 13) ;
un gaz de refroidissement pour refroidir le ferrocoke en tant que produit est injecté à partir de la tuyère d'injection de gaz de refroidissement (15) ; et
un gaz est déchargé à partir de l'orifice de décharge de gaz de traitement (19) au niveau de la partie haute de four,
et la longueur prédéterminée de la zone de trempage à haute température (5c) est établie entre 8 et 33 % de la longueur de four.
